(19) Europäisches Patentamt / European Patent Office / Office européen des brevets

(11) **EP 4 660 897 A1**

(12) **EUROPEAN PATENT APPLICATION**

(43) Date of publication:
**10.12.2025   Bulletin 2025/50**

(21) Application number: **24205992.1**

(22) Date of filing: **10.10.2024**

(51) International Patent Classification (IPC):
*G06N 10/40* (2022.01)       *G06N 10/70* (2022.01)

(52) Cooperative Patent Classification (CPC):
**G06N 10/40;** G06N 10/70

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority:  **06.06.2024  IT 202400013108**

(71) Applicant: **Xanadu Quantum Technologies Inc.**
**Toronto, Ontario M5G 2C8 (CA)**

(72) Inventors:
• **Bourassa, Joseph Eli**
  **Toronto, M4J 1C4 (CA)**

• **Gonzalez Arciniegas, Carlos Andres**
  **Toronto, M4M 3E9 (CA)**
• **Alexander, Rafael Nikolai**
  **Toronto, M2N 1T1 (CA)**
• **Chadwick, Rachel Sarah**
  **Toronto, M5V 3Y3 (CA)**
• **Lopetegui González, Carlos Ernesto**
  **75005 Paris (FR)**
• **Hastrup, Jacob**
  **2300 København S (DK)**
• **Banchi, Leonardo**
  **50038 Scarperia e San Piero (IT)**

(74) Representative: **Cooley (UK) LLP**
**22 Bishopsgate**
**London EC2N 4BQ (GB)**

(54) **APPARATUS AND METHODS FOR GAUSSSIAN BOSON SAMPLING STATE PREPARATION**

(57)    An apparatus includes a set of phase shifters, each phase shifter from the set of phase shifters optically coupled to one optical mode from a pair of optical modes configured to transmit substantially identical squeezed states of light. The apparatus also includes at least one directional coupler, each directional coupler from the at least one directional coupler optically coupled to a unique pair of phase shifters from the set of phase shifters. A photon number resolving (PNR) detector is operably coupled to a directional coupler from the at least one directional coupler. The apparatus is configured to generate, with a statistical probability greater than a predefined threshold, one or more desired non-Gaussian states of light, the one or more desired non-Gaussian states of light including at least one approximate Gottesman-Kitaev-Preskill (GKP) state.

$S(r_1)$ Squeezed light

$n$ Photon Number Resolving Detector (PNR)

$\theta$ Beamsplitter

—— Waveguide

**FIG. 1**

EP 4 660 897 A1

## Description

### Cross-Reference to Related Applications

This application claims priority to and the benefit of Italian Patent Application No. 102024000013108, filed June 6, 2024 and titled "Apparatus and Methods for Gaussian Boson Sampling State Preparation," the contents of which are incorporated by reference herein in their entirety for all purposes.

### Field

The present disclosure relates generally to the field of photonic quantum computing, and more specifically, to the generation of multimode Gaussian states.

### Background

The ability to store and coherently manipulate quantum optical pulses is desirable for quantum computing. Integrating these functions into a photonic chip with other quantum technologies, such as sources of non-Gaussian states, is a desirable practical step towards implementing such applications.

### Summary

According to an embodiment, an apparatus includes a set of N-1 beamsplitters, N being a positive integer having a value of at least 3. Each beamsplitter from the set of N-1 beamsplitters is (1) optically coupled at a first input of that beamsplitter to a first optical mode from a uniquely associated pair of optical modes from a plurality of optical modes, and (2) optically coupled at a second input of that beamsplitter to a second optical mode from the uniquely associated pair of optical modes from the plurality of optical modes. For each uniquely associated pair of optical modes from the plurality of optical modes and the beamsplitter from the set of N-1 beamsplitters optically coupled to that uniquely associated pair of optical modes, (1) the first input of the beamsplitter is coupled to the first optical mode downstream from a beamsplitter coupled to the first optical mode, and/or (2) the second input of the beamsplitter is coupled to the second optical mode upstream from a beamsplitter coupled to the second optical mode. The apparatus also includes a set of N-1 photon number resolving (PNR) detectors, each PNR detector from the set of N-1 PNR detectors being operably coupled to a different optical mode from the plurality of optical modes. The apparatus is configured to generate, with a statistical probability greater than a predefined threshold, at least one target non-Gaussian state of light without using any additional beamsplitters beyond the set of N-1 beamsplitters.

According to an embodiment, a method includes generating a single-mode squeezed state of light in a first output mode using a first squeezed light source from a set of N squeezed light sources, N being a positive integer having a value of at least 3. A plurality of further single-mode squeezed states of light is generated, each single-mode squeezed state of light from the plurality of single-mode squeezed states of light being in an associated non-output mode from a set of N-1 non-output modes, using the remaining squeezed light sources from the set of N squeezed light sources, the first output mode and the set of N-1 non-output modes collectively defining a set of N modes. The method also includes causing interference of each mode from the set of N modes with two or fewer other modes from the remaining modes from the set of N modes, via an associated beamsplitter from a set of N-1 beamsplitters. Each non-output mode from the set of N-1 non-output modes is measured using a photon number resolving (PNR) detector from a set of N-1 PNR detectors, to cause, with a statistical probability greater than a predefined threshold, at least one target non-Gaussian state to be heralded without using any additional beamsplitters beyond the set of N-1 beamsplitters.

According to an embodiment, an apparatus includes a set of phase shifters, each phase shifter from the set of phase shifters optically coupled to one optical mode from a pair of optical modes configured to transmit substantially identical squeezed states of light. The apparatus also includes at least one directional coupler, each directional coupler from the at least one directional coupler optically coupled to a unique pair of phase shifters from the set of phase shifters. A photon number resolving (PNR) detector is operably coupled to a directional coupler from the at least one directional coupler. The apparatus is configured to generate, with a statistical probability greater than a predefined threshold, one or more desired non-Gaussian states of light, the one or more desired non-Gaussian states of light including at least one approximate Gottesman-Kitaev-Preskill (GKP) state.

### Brief Description of the Drawings

FIG. 1 is a schematic diagram of an example two-mode Gaussian boson sampling (GBS) device for generating squeezed cat states, along with a legend defining circuit elements thereof, according to an embodiment.

FIG. 2 is a schematic diagram of an example two-mode GBS device implemented by a Mach-Zehnder interferometer, according to an embodiment.

FIG. 3 is a schematic diagram of a two-mode interferometer that can implement a two-mode GBS device when input light is equally squeezed, according to an embodiment.

FIG. 4a is a schematic diagram of a circuit for a staircase GBS device, according to an embodiment.

FIG. 4b depicts representations of the Wigner function, *qlp* quadrature marginal distributions, and a density matrix in the Fock basis for an example output state from a staircase GBS device with 5 modes, according to an embodiment.

FIG. 5a is a chart of output state quality and probability results for some example implementations of a staircase GBS device, according to an embodiment.

FIG. 5b is a chart that depicts an improvement in success probability, according to an embodiment.

FIG. 6 is a representation of an example of a four-peak approximate GKP state produced by a three-mode GBS device from a staircase GBS family of devices, according to an embodiment.

FIGS. 7a-c are schematic diagrams of circuits from a tree GBS family of devices, according to an embodiment.

FIG. 8 is a schematic diagram of a circuit from a repeated Kraus GBS family of devices, according to an embodiment.

FIG. 9a is a representation of quality, quantified via symmetric effective squeezing, q/p-quadrature effective squeezing, and probability for some of the output states of a three-mode instance of a repeated Kraus GBS family of devices, according to an embodiment.

FIG. 9b is representation of a Wigner function of output states, according to an embodiment.

FIG. 10 is a chart of 5 different example values of a deviation $\delta$ from an ideal beamsplitter angle, according to an embodiment.

FIG. 11 is a schematic diagram of a circuit for breeding together M + 1 output squeezed cat states of two-mode GBS devices, according to an embodiment.

FIG. 12 is a schematic diagram depicting steps for finding a three-mode GBS device from a breeding circuit that combines the output states of two two-mode GBS devices at a beamsplitter and a homodyne detector, according to an embodiment.

FIG. 13 is a schematic diagram of an example binary tree configuration for breeding together squeezed cat states produced from two-mode GBS devices, according to an embodiment.

FIGS. 14a-b are schematic diagrams of circuits associated with the repeated Kraus family, according to some embodiments.

## Detailed Description

### Introduction

#### GBS state preparation devices

A Gaussian boson sampling (GBS) state preparation device can be a device for probabilistically generating non-Gaussian states of photonic modes, which can be used as resource states for universal, fault-tolerant photonic quantum computation. An "optical mode" can refer to a container for a state of light. These containers can include, for example, a specific frequency ("frequency mode"), a specific temporal pulse ("temporal mode"), or a waveguide ("spatial mode"). To be considered as an optical mode, this container for the light should remain stable enough over the timescale of interest such that evolution of the state of light in this container over time can be interpreted. States of light can include Gaussian states (e.g., coherent states and squeezed states), as well as non-Gaussian states (e.g., squeezed cat states and Gottesman-Kitaev-Preskill (GKP) states). Therefore, an "optical mode" can refer to or include a container or other medium in which light (e.g., squeezed light, squeezed cat states, GKP states, etc.) resides and/or via which light (e.g., squeezed light, squeezed cat states, GKP states, etc.) may be transmitted.

Similarly stated, "light" as used herein can refer to oscillations of an electromagnetic field, and an optical model can refer to a stable oscillation of the electromagnetic field, such that a state of light evolving in that optical mode (e.g., that persists over a meaningful and/or predefined timescale) can be defined. An optical mode can also correspond to and/or be associated with an eigensolution of Maxwell's equations for the electromagnetic field, where a Hilbert space can be labeled with that eigensolution corresponding to a quantum harmonic oscillator. The variables of the oscillator can correspond to and/or be associated with the quadratures of the electromagnetic field for that eigensolution.

In general, the GBS state preparation device can implement a method of preparing a multimode Gaussian state and measuring a subset of the modes with photon number resolving detectors (PNRs), such that the remaining unmeasured modes are converted into non-Gaussian states. Since the conversion is conditioned on the measurement outcome, there is a statistical probability distribution of possible output states in the unmeasured modes indexed by the measurement outcomes. Because the measurement outcome and the multimode Gaussian state being measured are both known, however, the output state that was drawn from the probability distribution (e.g., the state that was heralded) can be known.

The preparation of a general multimode Gaussian state can be achieved by deterministically preparing a set of single-mode squeezed states, followed by a multimode linear optical transformation or interferometer to entangle the modes. In some implementations, this optical circuit can also include displacement gates, e.g., before or after the interferometer. The interferometer can be implemented via a network of beamsplitters and phase shifters. To implement an arbitrary linear optical transformation on $N$ modes, the interferometer can include $\frac{N(N-1)}{2}$ number of beamsplitters and can have a circuit depth of N.

Given certain one or more target states to be prepared using a GBS state preparation device, the parameters of the multimode Gaussian state can be tuned such that one or more PNR measurement outcomes heralds the desired target state(s). To construct the multimode Gaussian state described above, the parameters of the multimode Gaussian state can be tuned by changing: the level of squeezing in the single-mode squeezed states, the angles of the beamsplitters and phase shifters (e.g., relative to other beamsplitters and/or phase shifters) that make the interferometer, and/or the displacements applied to the multimode Gaussian states by the displacement gates.

Bosonic qubit states for universal fault-tolerant quantum computation

A number of methods exists for encoding qubits in photonic modes (bosonic qubits): e.g., dual rail, cat and squeezed cat states, binomial codes, GKP states, etc. These bosonic qubits can in turn be used together to encode logical qubits for universal, fault-tolerant quantum computation.

GBS state preparation devices can be used to generate bosonic qubits used for universal, fault-tolerant quantum computation, such as cat states and squeezed cat states, GKP states, etc. Moreover, protocols can be defined for converting between types of bosonic qubits, e.g.:

- from squeezed cat states to GKP states,
- from low quality squeezed cat states to higher quality squeezed cat states,
- from low quality GKP states to higher quality GKP states,
- from binomial codes to GKP states.

Thus, GBS devices can also be combined with "refineries" to convert output states of many GBS devices into a fewer number of more useful states.

Figures of merit for GBS state preparation devices

At least one figure of merit (e.g., performance metrics) can be used for evaluating GBS state preparation devices, such as:

- The output state quality, quantified by the GKP stabilizer expectation values and effective squeezing.
- The success probability of the device-since GBS devices are probabilistic sources due to the PNR measurements, the probability of successfully generating a useful state can be indicative of performance. A predefined threshold value can be established for this probability. For example, a device can have a 1% success probability, and 512 of such devices running in parallel can result in a greater than 99% chance of at least one of these 512 devices succeeding. As a further example, a device can have a 10% success probability, and 64 of such devices in a parallel configuration can result in a greater than 99% chance of at least one of these 64 devices successfully generating a useful state.

- The number of components-for hardware implementations of the device, fewer components facilitate lower accumulated photon loss as light travels through the circuit, as well as simpler control electronics and calibration procedures.
- The loss tolerance of the device, e.g., how robust the output state quality and probability are to photon loss at each component.

Quality of approximate GKP states: Stabilizer expectation values and effective squeezing

A quantum state can be "stabilized" by its stabilizer (an operator) if it is left unchanged when acted upon by the stabilizer: $S|\psi\rangle = |\psi\rangle$. Ideal GKP states can be defined via the displacement operators that stabilize them. For example, GKP square lattice qubits $\left|\psi_{GKP}^{sq.}\right\rangle$ can be stabilized by $2\sqrt{\pi h}$ shifts in both the $q$ and $p$ directions of phase space:

$$D\left(\sqrt{2\pi}\right)\left|\psi_{GKP}^{sq.}\right\rangle = \left|\psi_{GKP}^{sq.}\right\rangle, \mathrm{D}\left(i\sqrt{2\pi}\right)\left|\psi_{GKP}^{sq.}\right\rangle = \left|\psi_{GKP}^{sq.}\right\rangle, \tag{1}$$

where $D(\alpha) = e^{\alpha\hat{a}^\dagger \alpha^*\hat{a}}$, meaning $D\left(\sqrt{2\pi}\right) = e^{-i\hat{p}\left(2\sqrt{\frac{\pi}{\hbar}}\right)}$ and $D\left(i\sqrt{2\pi}\right) = e^{i\hat{q}\left(2\sqrt{\frac{\pi}{\hbar}}\right)}$. Here, $\hat{a}$ is the photon annihilation operator of the mode, and $\hat{q} = \sqrt{\frac{\hbar}{2}}(\hat{a}^\dagger + \hat{a})$ and $\hat{p} = i\sqrt{\frac{\hbar}{2}}(\hat{a}^\dagger - \hat{a})$ are the position and momentum quadrature operators for the mode. Note that these stabilizers do not uniquely specify the state, but instead stabilize a 2D Hilbert space that defines the qubit code space. Since the states are stabilized by displacements, the states can respect a discrete translational symmetry that defines a lattice of points in phase space.

It can be beneficial to produce the GKP "sensor" or "qunaught" state $|\varnothing_{GKP}\rangle$ within a fault-tolerant architecture, since two sensor states can be transformed into square lattice GKP Bell pairs using a beamsplitter. The sensor state is not a qubit since the sensor state is uniquely specified by its stabilizers (e.g., a 1D Hilbert space). Its stabilizers can be shifted by $\sqrt{2\pi h}$ in both the $q$ and $p$ directions of phase space:

$$D\left(\sqrt{\pi}\right)|\varnothing_{GKP}\rangle = |\varnothing_{GKP}\rangle, \quad D\left(i\sqrt{\pi}\right)|\varnothing_{GKP}\rangle = |\varnothing_{GKP}\rangle. \tag{2}$$

The expectation value of a stabilizer operator for an ideal GKP state can (e.g., always) evaluate to +1; however, if the ideal GKP state is displaced away from its lattice, then the stabilizer expectation values can be used to determine how far the state has been displaced from the lattice:

$$\langle\varnothing|D^\dagger(\beta)D\left(\sqrt{\pi}\right)D(\beta)|\varnothing\rangle = e^{i\varphi}\langle\varnothing|D\left(\sqrt{\pi}\right)|\varnothing\rangle = e^{i\varphi}, \ \varphi = -2\sqrt{\pi}\,\mathrm{Im}(\beta), \tag{3}$$

$$\langle\varnothing|D^\dagger(\beta)D\left(i\sqrt{\pi}\right)D(\beta)|\varnothing\rangle = e^{i\varphi'}\langle\varnothing|D\left(i\sqrt{\pi}\right)|\varnothing\rangle = e^{i\varphi'}, \ \varphi' = 2\sqrt{\pi}\,\mathrm{Re}(\beta). \tag{4}$$

Thus, the phase of the stabilizer expectation values provides the displacement that can cause the GKP state to be centered on its lattice. If $\left|\langle D\left(\sqrt{\pi}\right)\rangle\right| = \left|\langle D\left(i\sqrt{\pi}\right)\rangle\right| = 1$, the GKP state can be an ideal GKP sensor state (e.g., up to a displacement).

The stabilizer expectation values are a common figure of merit for measuring the quality of approximate GKP states. Consider, for example, the calculation of the stabilizer expectation value for an arbitrary state in the quadrature basis that diagonalizes the displacement operator:

$$\langle S_\alpha\rangle_\rho = \int dq_\phi\, e^{i\sqrt{2}|\alpha|q_\phi/\sqrt{\hbar}}P\left(q_\phi\right), \ \alpha = |\alpha|e^{i\phi}, \ \hat{q}_\phi = \hat{q}\sin\phi + \hat{p}\cos\phi \tag{5}$$

where $P(q_\phi)$ is the quadrature probability distribution along the axis orthogonal to the direction of the displacement. For example, if the displacement is along the $q$-quadrature axis, the displacement can be diagonal in $\hat{p}$, so its expectation value can indicate the marginal of the state in the $p$ quadrature.

Referring to the integral in Eq. 5, if $P(q_\phi)$ is concentrated near values of $q_\phi = $ $\sqrt{2\hbar}\pi n/|\alpha|, n \in \mathbb{Z}$ (e.g., in a GKP state with sharp peaks aligned to integer multiples of a lattice spacing), then for those values the complex exponential in the integral can be close to $e^{in\sqrt{2}|\alpha|\sqrt{2}\pi/|\alpha|} = e^{2\pi in} = 1$ . Thus, the integral can accumulate the weight of the probability distribution in those regions. The more concentrated and/or peaked $P(q_\phi)$ is on a lattice with spacing $\sqrt{2\hbar}\pi/|\alpha|$ , the closer the magnitude of the stabilizer expectation value can be to 1 since the probability distribution must integrate to 1. Note that even if the probability distribution is concentrated along the lattice with spacing $\sqrt{2\hbar}\pi/|\alpha|$ but offset by $\delta\sqrt{\hbar}$ , (e.g., periodic every $q_\phi = $ $\delta\sqrt{\hbar} + \sqrt{2\hbar}\pi n)/|\alpha|$ ), the integral will approach $e^{i\delta\sqrt{2}|\alpha|}$ , which still has magnitude close to 1, so the phase can be interpreted as being related to the displacement away from the lattice, as discussed above.

Thus, the closer the magnitude of the stabilizer expectation value is to 1, the more concentrated/peaked the probability distribution can be along the lattice. This does not necessarily mean that the state is periodic. For example, a squeezed state can have a very concentrated quadrature marginal distribution in one quadrature, even though it is not periodic. Thus, it is desirable to check two stabilizers. For a state squeezed along $q_\phi$, it may not have a concentrated probability distribution along other quadrature marginals $q_\phi$. Approximate GKP states, however, can have concentrated probability distributions along lattices for more than one quadrature.

Since the stabilizer expectation value is essentially a measure of how peaked the quadrature probability distribution is along a quadrature, the stabilizer expectation value can be expressed in terms of a variance, known as the effective squeezing:

$$\sigma_\alpha^2 = \frac{1}{|\alpha|^2}\log\left(\frac{1}{|\langle S_\alpha\rangle_\rho|^2}\right). \qquad (6)$$

Variances can be expressed in units of decibels (dB) by taking: $\sigma_{\alpha,\mathrm{dB}}^2 = -10\log_{10}\sigma_\alpha^2$ . To compare the effective squeezing values of approximate GKP states on different lattices, the GKP state can be aligned to a common lattice, such as the square sensor state lattice. The effective squeezing values once states have been aligned to the square sensor state lattice can be denoted as $\left(\sigma_{\sqrt{\pi}}^2, \sigma_{i\sqrt{\pi}}^2\right)$ .

To satisfy more than one stabilizer, the overall state quality can be quantified by averaging the effective squeezing values associated with two stabilizers:

$$\sigma_{\mathrm{symm}}^2 = \frac{1}{2}\left(\sigma_{\sqrt{\pi}}^2 + \sigma_{i\sqrt{\pi}}^2\right). \qquad (7)$$

This quantity can be referred to as the symmetric effective squeezing since, operationally, this quantity can be interpreted as the effective squeezing of one half of a Bell pair constructed from the approximate state and its rotated copy passed through a balanced beamsplitter. By construction, such a state will have equal stabilizer expectation values in both quadratures.

GBS devices can be configured to produce states (1) that have symmetric (or substantially symmetric) effective squeezing and/or (2) that can be refined into states with symmetric (or substantially symmetric) effective squeezing.

Success probability

Since the PNR outcomes of the GBS device are probabilistic, the output state generation is not deterministic, although it is still heralded by the PNR measurement pattern. Because high-probability sources of GKP states are desirable for fault-tolerant quantum computing, the success probability of the GBS devices is another figure of merit. This means it may be desirable for the probabilities of individual output states to be high, but the total number of useful output states the device can produce is relevant, and the total cumulative probability of that set of states is also relevant.

### Number of components

For on-chip implementations of the GBS device, a certain number of optical elements can be selected to realize the multimode Gaussian state that will be measured in some modes to produce output states. Minimizing and/or reducing the number of optical components that light passes through can minimize and/or reduce accumulated photon loss. Moreover, since each optical component typically involves electronic control and calibration, minimizing the number of components can be desirable for simplifying the practical use of the hardware.

### Loss tolerance

Photon loss can be a significant source of experimental imperfection in GBS devices, so robustness of the output state quality and probabilities in the presence of photon loss at different components can be an important consideration of a fault-tolerant architecture. More robust devices can maintain high output state quality and probability even in the presence of photon loss.

## Two-mode GBS

### Description of the device

A two-mode GBS device is an example of a GBS device. The two-mode GBS device can be configured to cause two squeezed states to interfere at a two-mode interferometer. The two-mode GBS device can then measure one of these states using a PNR detector, projecting the other mode into a non-Gaussian state in general.

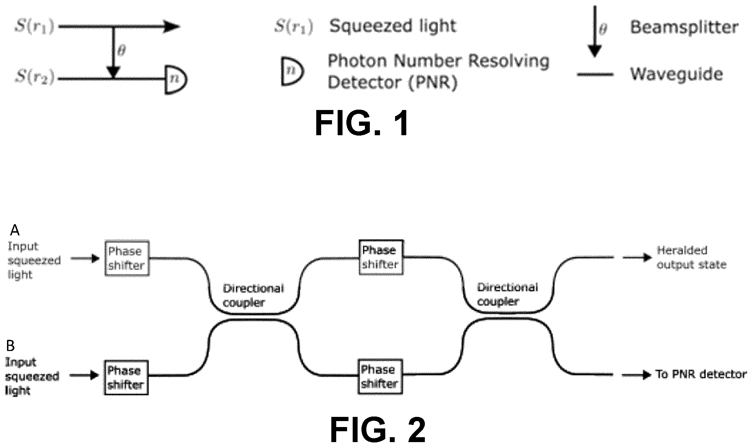

FIG. 1 is a schematic diagram of an example two-mode GBS device for generating squeezed cat states, along with a legend defining circuit elements thereof, according to an embodiment. As illustrated in FIG. 1, the two-mode GBS device can be configured to produce cat states and squeezed cat states, which can be used directly as bosonic qubits and/or as a resource for generating GKP qubits.

### Hardware-friendly implementation

In some implementations, a Mach-Zehnder interferometer can be used to implement the arbitrary two-mode interferometer described in relation to FIG. 1. FIG. 2 is a schematic diagram of an example two-mode GBS device implemented by a Mach-Zehnder interferometer, according to an embodiment. A Mach-Zehnder interferometer can include phase shifters and two directional couplers, as shown in FIG. 2. A Mach-Zehnder interferometer can be desirable because the directional couplers can be static elements set to split the light fields equally (or substantially equally), while the phase shifters can be tuned to apply the desired two-mode interferometer. In some implementations, the input squeezed light "A" and the input squeezed light "B" are squeezed states that are identical or substantially identical. The input squeezed light A and the input squeezed light B can be provided by the same type of squeezed light source (e.g., having a common hardware implementation), by a single common squeezed light source, or by different types of squeezed light source (e.g., having different hardware implementations).

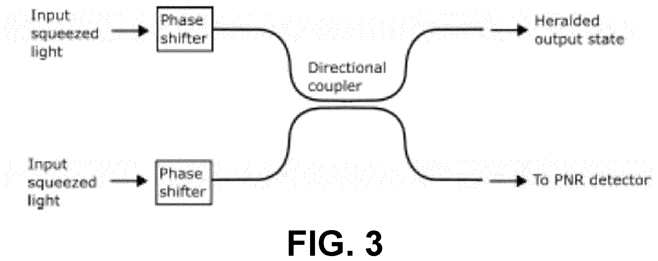

FIG. 3 is a schematic diagram of a simpler two-mode interferometer (e.g., as compared to the two-mode interferometer shown in FIG. 2) that can be employed to implement the two-mode GBS device when the input light is equally squeezed (e.g., as would be expected from identical squeezed vacuum sources), according to an embodiment. In that case, the two-mode interferometer described above can be implemented with only two phase shifters and a single 50:50 directional coupler, as shown in FIG. 3. This simplification can be advantageous for reducing noise due to photon loss, since the light needs to pass through fewer components, and can be further advantageous due to the reduced number of tunable elements (e.g., phase shifters) to be controlled. Moreover, for the two-mode interferometer settings used to produce squeezed cat states, fabrication imperfections in the directional coupler (e.g., if the directional coupler does not split the light equally) can be compensated for via the phase shifters, provided that the actual splitting ratio is known and the deviation from ideal is not too large (e.g., the deviation is less than a predetermined threshold value).

## N-mode GBS devices using N-1 beamsplitters

The following describes example families of GBS devices on N modes that employ *N-1* beamsplitters to generate approximate GKP states. A family can refer to a plurality of set layouts for the interferometer, where each set layout is associated with a member that is different from remaining members from the family, and each member is associated with a different number of specified modes than remaining members from the family. An advantage of these families over the most general GBS device on N modes is that the number of beamsplitters is *N-1* as opposed to the $\frac{N(N-1)}{2}$ beamsplitters

that a universal linear optical interferometer includes. Note that at least some systems and methods described herein do not require a universal interferometer, since these systems and methods generate approximate GKP states rather than apply the most general linear optical transformation between the modes. Reducing the number of beamsplitters can be important for reducing the number of components the light passes through, which can reduce degradation of state quality due to photon loss. For an on-chip implementation, reducing the number of beamsplitters can also reduce the number of electrical control components that are used to stabilize the interferometer and/or can simplify calibration of the device.

GBS Family #1 (Staircase GBS)

*Description of the device*

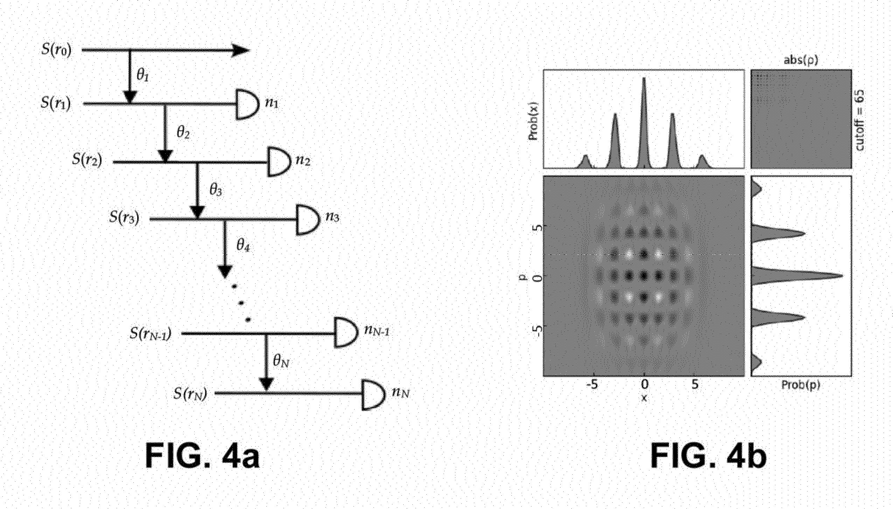

The staircase GBS family of GBS devices is a set of devices for preparing approximate GKP states. FIG. 4a is a schematic diagram of a circuit for the staircase GBS device on N modes. FIG. 4b depicts the Wigner function, $q/p$ quadrature marginal distributions, and density matrix in the Fock basis for an example output state from the staircase GBS device with 5 modes. As shown in the marginal distribution at the top of FIG. 4b, the output state is an approximate superposition of 5 displaced squeezed states along the $q$ quadrature. The heights of the squeezed states can be tuned via the GBS parameters, which improves the effective squeezing of the peaks in the $p$ quadrature (lower right quadrant). If the number of modes (also referred to herein as "optical modes") is equal to N, then the staircase GBS device from the staircase family can have N-1 beamsplitters arranged in a "staircase" configuration, as shown in FIG. 4a. The input to each mode can be a single-mode squeezed state, from a plurality of single-mode squeezed states. In general, each single-mode squeezed state can have a different associated level of squeezing (e.g., as compared to states received at other modes) represented by $S(r_i)$. In some instances, these states can also be displaced. In some implementations, each single-mode squeezed state from the plurality of single-mode squeezed states can be provided by the same type of squeezed light source (e.g., having a common hardware implementation) or by a single common squeezed light source. In other implementations, a subset of single-mode squeezed states from the plurality of single-mode squeezed states is provided by the same type of squeezed light source (e.g., having a common hardware implementation) or by a single common squeezed light source. In still other implementations, each single-mode squeezed state from the plurality of single-mode squeezed states can be provided by a different type of squeezed light source (e.g., having a different hardware implementation). Each mode can interfere with at most two others via the beamsplitters, which are parametrized by $(\theta_i, \phi_i)$. As shown in FIG. 4a, each beamsplitter from the set of N-1 beamsplitters is optically coupled to an associated pair of optical modes via an associated waveguide from a plurality of waveguides (represented by the horizontal lines, as shown in the legend of FIG. 1). Except for the output mode, each mode and/or associated waveguide can terminate at a PNR (said modes referred to herein as "non-output" modes) that registers $n_i$ photons. In some instances:

- The first and second squeezers can have equal amounts of squeezing, and the remaining squeezers can have an equal amount of squeezing different than the first two modes.

- Many PNR patterns can yield approximate GKP states. In some cases, different PNR patterns yield different lattices in phase space heralded by the PNR pattern, which can inform the settings of a refinery that can be operably coupled to an output of the staircase GBS device.

- The beamsplitter angles can follow a predictable pattern, namely $\phi_i = 0$ and $\theta_i = \dfrac{\arctan \sqrt{M-i}}{}$, $i > 1$.

- The amount of tolerable loss in each mode can increase with the number of modes, while the quality of output state remains constant.

The staircase GBS can include a set of N-1 beamsplitters, where N is a positive integer with a value of at least 3. Each beamsplitter can be optically coupled, at a first input of that beamsplitter, to a first optical mode from a uniquely associated pair of optical modes from a plurality of optical modes. Each beamsplitter can also be optically coupled, at a second input of that beamsplitter, to a second optical mode from the uniquely associated pair of optical modes from the plurality of optical modes. The first input of a beamsplitter can be coupled to the first optical mode downstream from a beamsplitter coupled to the first optical mode, and/or the second input of the beamsplitter can be coupled to the second optical mode upstream from a beamsplitter coupled to the second optical mode. The staircase GBS device can also include a set of N-1 photon number resolving (PNR) detectors, and each PNR detector can be operably coupled to a different optical mode from the plurality of optical modes. The staircase GBS device can generate a non-Gaussian state of light without using any additional beamsplitters beyond the set of N-1 beamsplitters.

*Performance of the staircase GBS family*

For N modes, the staircase GBS device can produce approximate GKP states that can be understood as approximate superpositions of N displaced squeezed states along a quadrature axis of phase space. See FIG. 4b for an example. By tuning the beamsplitter angle between the first two modes and the level of squeezing in all but the first two modes, the relative heights of the squeezed states in the superposition can be tuned, which can improve the effective squeezing of the orthogonal quadrature. This improvement is due to the orthogonal quadrature being related to the quadrature via a Fourier transform, so the envelope (e.g., relative heights of the peaks) in one quadrature is related to the sharpness of the peaks in the other quadrature. Moreover, by increasing the squeezing levels of all the squeezers (and tuning the beamsplitter angles accordingly), the probability of higher photon number patterns being detected can be boosted, which can yield better approximate GKP states with higher probability. This increase in squeezing levels can permit the staircase GBS device family to produce increasingly higher quality GKP states by using more modes in the device.

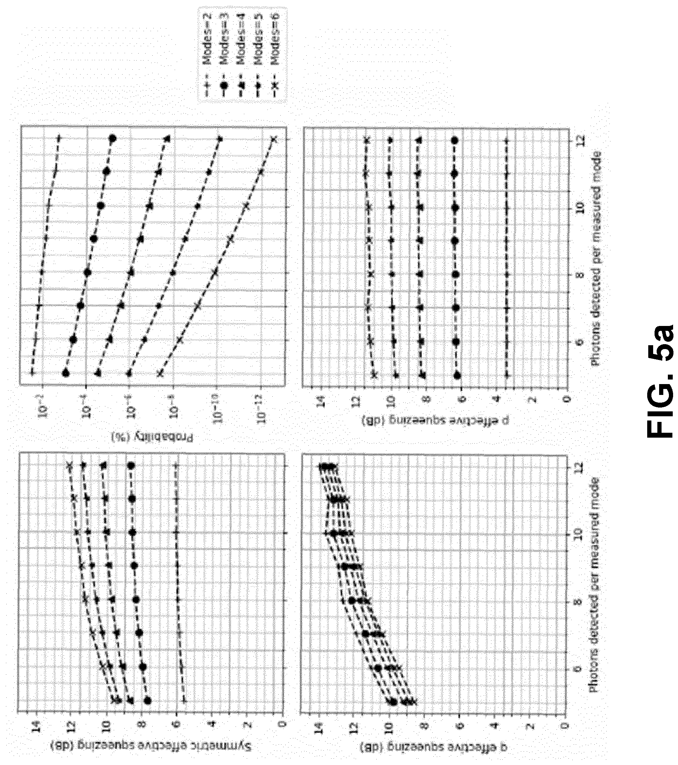

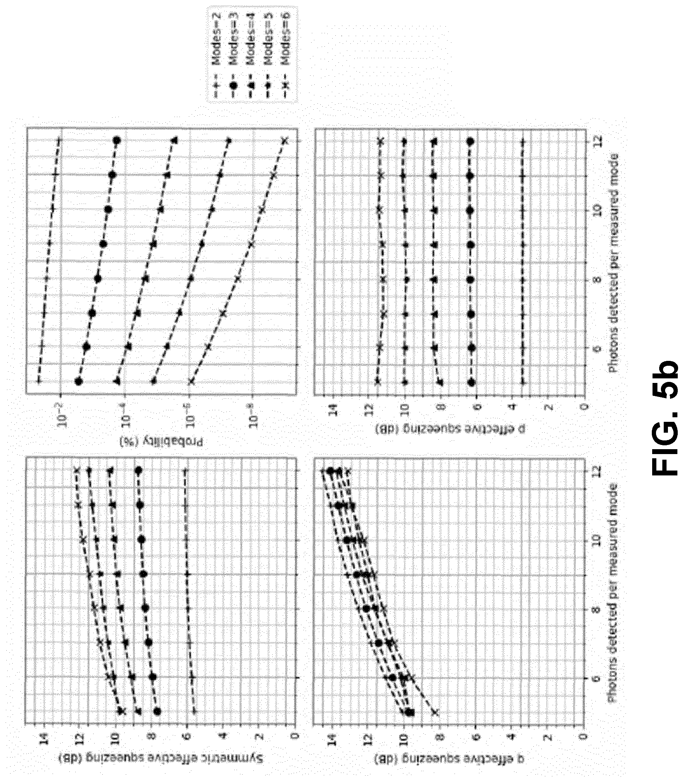

FIG. 5a depicts a chart of output state quality and probability results for some example implementations of the staircase GBS device. As shown in FIG. 5a, the state quality can improve with more modes and higher photon numbers detected in each mode. This state quality improvement can come with a trade-off for probability. FIG. 5b is a chart that depicts an improvement in success probability. The success probability can be boosted (e.g., by orders of magnitude) by increasing the level of squeezing in the squeezed states of light input to the circuit of the staircase GBS device.

More specifically, FIG. 5a illustrates quality, quantified via symmetric effective squeezing, and $q$/$p$-quadrature effective squeezing, and probability for some of the output states of some instances of the staircase GBS family of devices. By increasing the number of modes (different dot styles) and the number of photons detected in each detector (horizontal axis), the quality of the states improves, as quantified by symmetric effective squeezing. This comes at a trade-off with probability; however, probability can be boosted via the level of input squeezing, as shown in FIG. 5b. In FIG. 5a, the maximum level of input squeezing is within the range of 8-10.5 dB depending on the number of modes and PNR pattern. FIG. 5b depicts similar plots to FIG. 5a, except with higher input squeezing to the GBS devices. FIG. 5b illustrates that the probability can be boosted by orders of magnitude, with essentially the same symmetric effective squeezing of the output state as a function of the number of modes and detected photons. Here, the maximum level of input squeezing is within the range of 12-16 dB depending on the number of modes and PNR pattern.

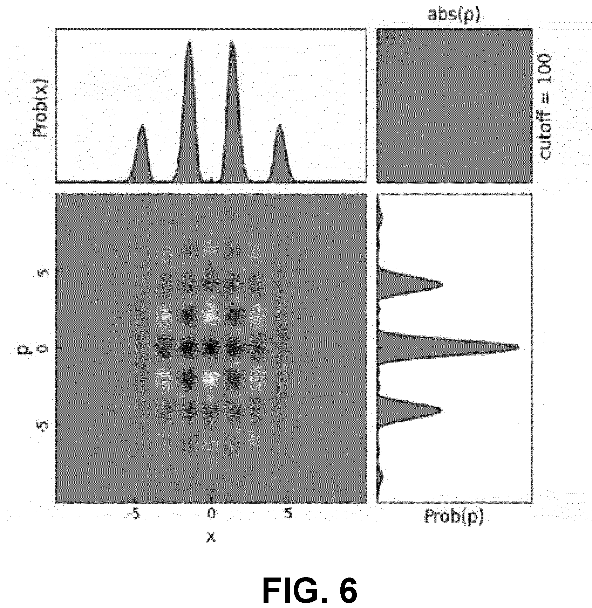

In some other instances, by employing the staircase GBS device with N modes, the beamsplitter angles and level of input squeezing can be tuned to produce approximate GKP states that can be understood as approximate superpositions of up to $2^{N-1}$ displaced squeezed states along a quadrature axis of phase space. An example of a four-peak approximate GKP state produced from a three-mode GBS device from the staircase GBS family is shown in FIG. 6.

GBS Family #2 (Tree GBS)

*Description of the device*

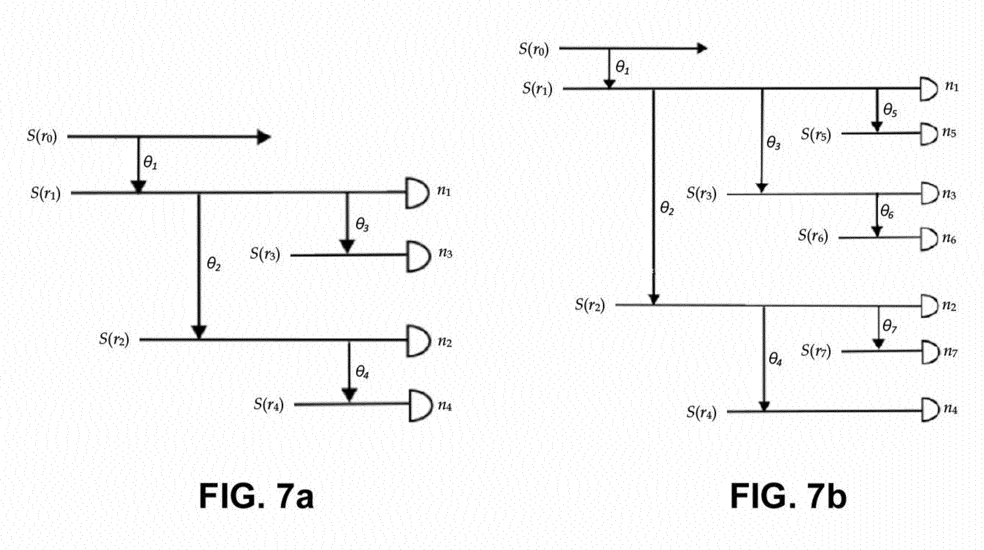

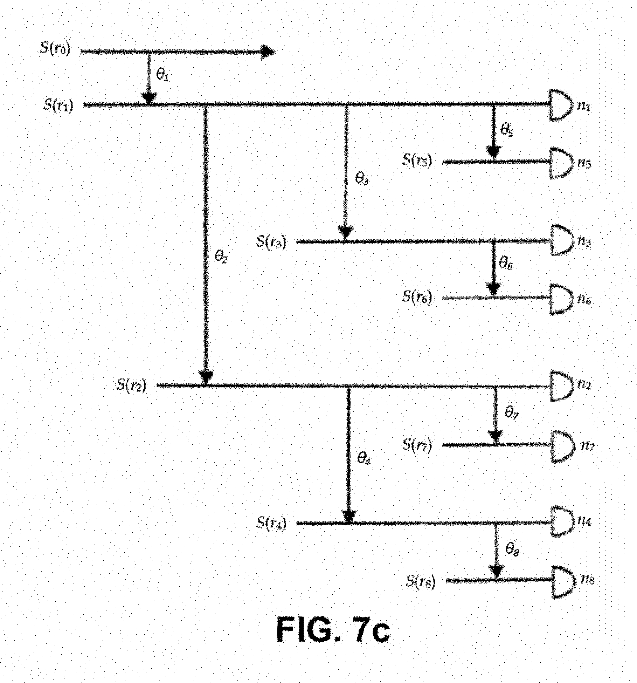

The tree GBS family of GBS devices is a set of devices for preparing approximate GKP states. FIGS. 7a-c depict circuits for the tree GBS family members with 5 (depicted in FIG. 7a), 8 (depicted in FIG. 7b), and 9 modes (depicted in FIG. 7c). As a simplification, the beamsplitter phases are $\phi_i = 0$. If the number of modes is equal to N, the GBS device from the tree family can have N-1 beamsplitters arranged in a "tree" (or nested hierarchical) configuration, as shown in FIGS. 7a-c. In general, the input to each mode can be a single-mode squeezed state with a different level of squeezing (e.g., as compared to other modes) represented by $S(r_i)$. Each mode can interfere with at most a logarithmic depth of beamsplitters parametrized by $(\theta_i, \phi_i)$. Except for the output mode, each mode can terminate at a PNR (said modes referred to herein as "non-output" modes) that registers $n_i$ photons.

*Performance of the tree GBS family*

As described further herein, circuit configuration on N modes from a member of the staircase GBS family can be mapped to a different circuit configuration on N modes in the tree GBS family that produces the same output state. Thus, the performance of the staircase GBS device as previously described can also apply to the tree GBS device.

An advantage to the tree family of GBS devices (e.g., as compared to the staircase GBS device) is that the longest path of light from squeezer to detector encounters a logarithmic (in the number of modes) number of beamsplitters, as opposed to the staircase GBS device, where light encounters a linear number of beamsplitters. If each beamsplitter is imperfect and subjects the light to photon loss, the reduced depth of the tree family of GBS devices can reduce photon loss while retaining other advantages of the staircase GBS device.

GBS Family #3 (Repeated Kraus GBS)

*Description of the device*

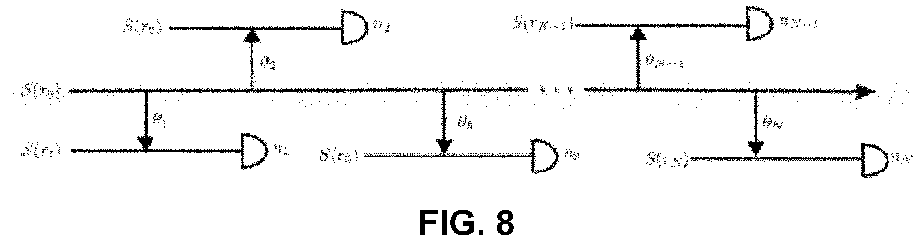

The repeated Kraus GBS family of GBS devices is a set of devices for preparing approximate GKP states. FIG. 8 is a schematic diagram of a circuit for the repeated Kraus GBS family on N modes. If the number of modes is equal to N, the GBS device from the repeated Kraus family can have N-1 beamsplitters arranged as shown in FIG. 8. In general, the input to each mode can be a single-mode squeezed state with a different level of squeezing represented by $S(r_i)$. One central mode can interact in succession with each of the other modes via beamsplitters parametrized by $(\theta_i, \phi_i)$. Except for the output mode, each mode can terminate at a PNR (said modes referred to herein as "non-output" modes) that registers $n_i$ photons.

*Performance of the repeated Kraus GBS family*

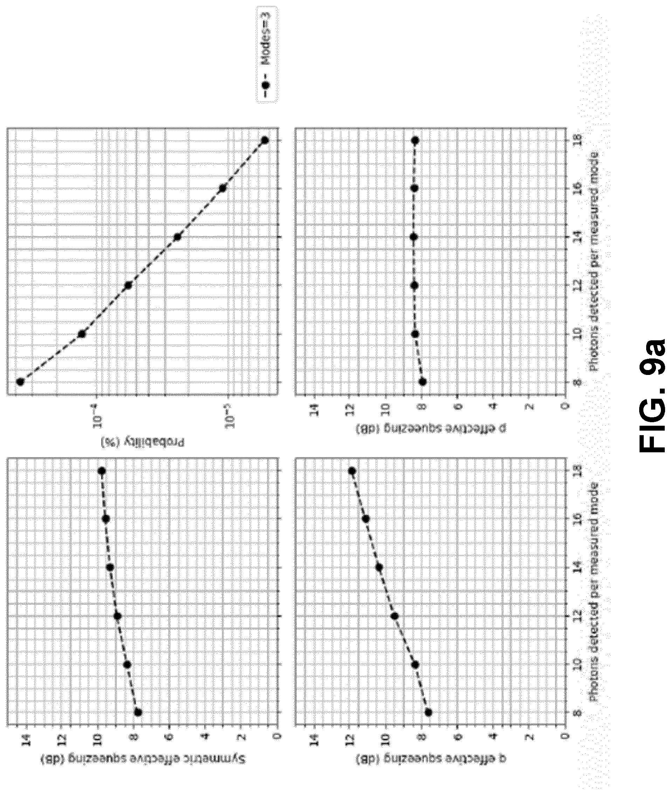

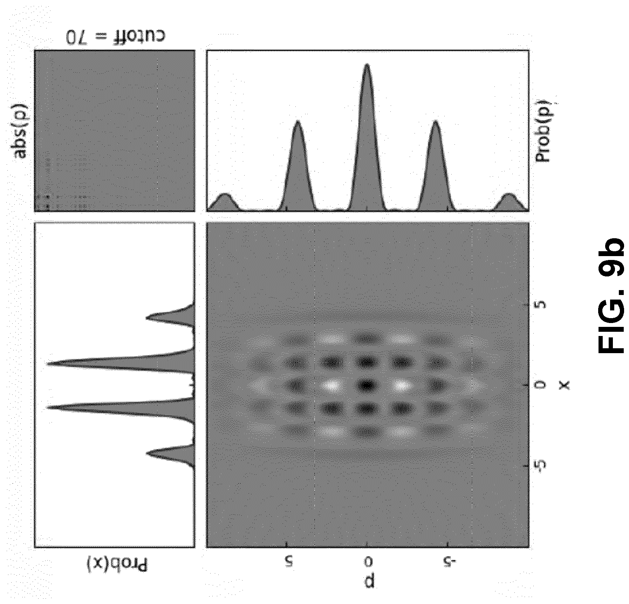

The derivations for the repeated Kraus GBS device are described further herein. A linear or an exponential number of peaks in the quadrature distribution can be produced using a linear number of applications of the repeating unit of the circuit (e.g., to cause interference with a squeezed state at a beamsplitter followed by a PNR measurement). FIG. 9a is a depiction of quality, quantified via symmetric effective squeezing, $q/p$-quadrature effective squeezing, and probability for some of the output states of a three-mode instance of the repeated Kraus GBS family of devices. By increasing the number of photons detected in each detector (horizontal axis), the quality of the states improves, as quantified by symmetric effective squeezing. This comes at a trade-off with probability. As shown in FIG. 9a, the maximum level of input squeezing is approximately 12 dB. FIG. 9b depicts a Wigner function of the output states heralded by the PNR pattern (12, 12).

**Hardware-friendly implementation of a two-mode GBS**

Ideal case

As described further herein, a two-mode GBS device (e.g., as depicted in FIG. 1) that is implemented via a Mach-Zehnder interferometer and that is tuned to produce the beamsplitter BS($\theta$) (e.g., as depicted in FIG. 2) can be replaced with two phase shifters and a 50:50 directional coupler (e.g., as depicted in FIG. 3). Mathematically, the replacement can be represented by:

$$\left[\hat{I} \otimes \hat{R}(\varphi_3)\right]\widehat{BS}\left(\frac{\pi}{4}\right)\left[\hat{R}(\varphi_1) \otimes \hat{R}(\varphi_2)\right]\left[\hat{S}(r)^{\otimes 2}\right]|0,0\rangle = \widehat{BS}(\theta)\left[\hat{I} \otimes \hat{R}\left(\frac{\pi}{2}\right)\right]\left[\hat{S}(r)^{\otimes 2}\right]|0,0\rangle.$$

$$(8)$$

Note that:

$$\left[\hat{R}\left(\phi+\frac{3\pi}{2}\right) \otimes \hat{R}(\phi+\pi)\right]\widehat{BS}(\theta)\left[\hat{I} \otimes \hat{R}\left(\frac{\pi}{2}\right)\right] = \widehat{BS}\left(\frac{\pi}{4}\right)\left[\hat{R}(\xi_+) \otimes \hat{R}(\xi_-)\right]\widehat{BS}^\dagger\left(\frac{\pi}{4}\right) \quad (9)$$

where $\xi_\pm = \phi \pm \theta - \frac{\pi}{2}$. The two-mode GBS circuit then becomes:

$$\widehat{BS}(\theta)\left[\hat{I} \otimes \hat{R}\left(\frac{\pi}{2}\right)\right]\left[\hat{S}(r)^{\otimes 2}\right]|0,0\rangle$$

$$= \left[\hat{R}\left(\phi+\frac{3\pi}{2}\right) \otimes \hat{R}(\phi+\pi)\right]^\dagger \widehat{BS}\left(\frac{\pi}{4}\right)\left[\hat{R}(\xi_+) \otimes \hat{R}(\xi_-)\right]\widehat{BS}^\dagger\left(\frac{\pi}{4}\right)\left[\hat{S}(r)^{\otimes 2}\right]|0,0\rangle \quad (10)$$

$$= \left[\hat{R}\left(\phi+\frac{3\pi}{2}\right) \otimes \hat{R}(\phi+\pi)\right]^\dagger \widehat{BS}\left(\frac{\pi}{4}\right)\left[\hat{R}(\xi_+) \otimes \hat{R}(\xi_-)\right]\left[\hat{S}(r)^{\otimes 2}\right]|0,0\rangle \quad (11)$$

where in the second last step, the fact that a beamsplitter applied to equally squeezed states does nothing (e.g., has no effect) is leveraged. Next, $\phi = -\frac{3\pi}{2}$ is chosen and $\varphi_1 = \xi_+$, $\varphi_2 = \xi_-$, $\varphi_3 = \frac{\pi}{2}$ is identified. Note that in some instances (e.g., in practice), $\varphi_3$ is not needed since the second mode of the two-mode GBS device can be measured by a PNR, which is insensitive to phase.

Fabrication error tolerance

It can be shown numerically that even if the 50:50 directional coupler is subject to a known deviation $\delta$ from the ideal angle $\frac{\pi}{4}$, $\varphi_1$ and $\varphi_2$ can still be chosen to cause the same operation to be applied to the squeezed states as the target beamsplitter $BS(\theta)$.

Mathematically, it can be determined under what conditions $\varphi_1$ and $\varphi_2$ can be chosen such that:

$$\left[\hat{I} \otimes \hat{R}(\varphi_3)\right]\widehat{BS}\left(\frac{\pi}{4} - \delta\right)\left[\hat{R}(\varphi_1) \otimes \hat{R}(\varphi_2)\right]\left[\hat{S}(r)^{\otimes 2}\right]|0,0\rangle = \widehat{BS}(\theta)\left[\hat{I} \otimes \hat{R}\left(\frac{\pi}{2}\right)\right]\left[\hat{S}(r)^{\otimes 2}\right]|0,0\rangle \tag{12}$$

where, $\delta$ is a fixed, known deviation from ideal.

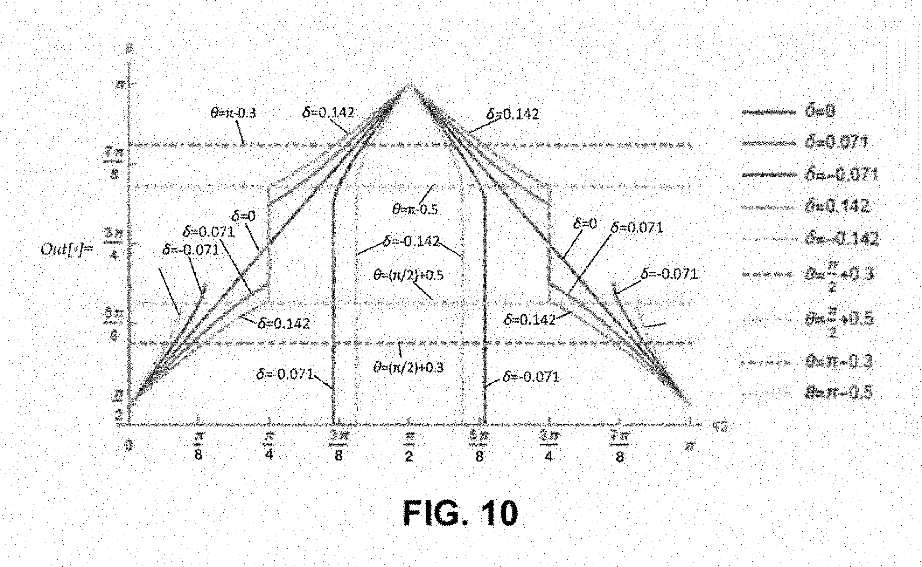

For different values of $\delta$, the values of $\varphi_1$, $\varphi_2$, and $\varphi_3$ can be searched to determine what $\theta$ can be swept. To do this, first $\varphi_1$ and $\varphi_3$ are restricted so that the state does not have any correlations between $\hat{q}$- and $\hat{p}$-type quadratures. This leaves one effective parameter, $\varphi_2$, which can be varied to determine what $\theta$ can be reached for different values of $\delta$. FIG. 10 depicts an example of 5 different values of $\delta$ and shows how large the magnitude of $\delta$ can be such that mapping can be performed onto all $\theta$ between 0.3 and 0.5, which can be a favorable range of beamsplitter angles for generating approximate squeezed cat states with approximately 10 dB of input squeezing.

As shown in FIG. 10, the range of angles is from $\frac{\pi}{2}$ to $\pi$. This can be understood by noting that Eq. 12 is equivalent to

$$\left[\hat{I} \otimes \hat{R}(\varphi_3)\right]\widehat{BS}\left(\frac{3\pi}{4} - \delta\right)\left[\hat{R}(\varphi_1) \otimes \hat{R}(\varphi_2)\right]\left[\hat{S}(r)^{\otimes 2}\right]|0,0\rangle \tag{13}$$

From the plot depicted in FIG. 10, as the magnitude of $\delta$ gets larger, the range of possible $\theta$ decreases monotonically, but in some instances (e.g., in practice), $\delta$ can be much smaller than these large deviations shown in FIG. 10.

## Derivation of staircase GBS devices from breeding protocols

A two-mode GBS device (e.g., that is structurally and/or functionally similar to the two-mode GBS device shown in FIG. 1) can produce approximations to squeezed cat states that are suitable for breeding protocols. For fixed device settings (e.g., squeezing level and beamsplitter angle), the spacing between the two $q$-quadrature peaks of the squeezing can depend on the PNR pattern detected.

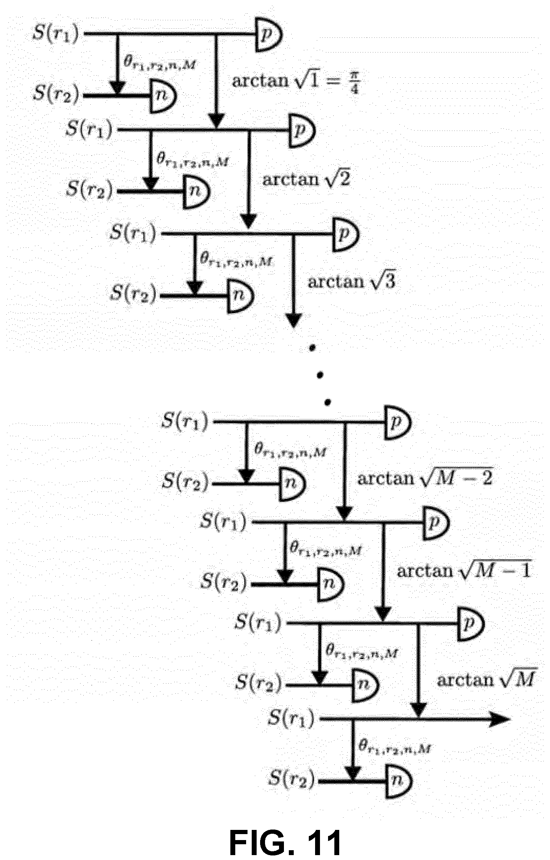

A schematic diagram of a circuit for breeding together $M + 1$ cat states with equal spacing between their peaks is shown in FIG. 11. More specifically, FIG. 11 depicts a circuit for breeding together $M + 1$ output squeezed cat states of two-mode GBS devices. If all the GBS devices detect the same number of photons, then the spacing of the peaks of the squeezed cat states emerging from the two-mode GBS devices can all be the same. In that case, the beamsplitter settings will interfere them correctly such that heralding on homodyne outcome $p = 0$ produces an output state with $M + 2$ peaks. If the cat states are generated from two-mode GBS devices, then detecting the same PNR outcome in all devices will yield cat states with equal spacing between their two peaks. The output state of the breeding circuit is in general an approximate GKP state with $M + 2$ peaks in the $q$-quadrature.

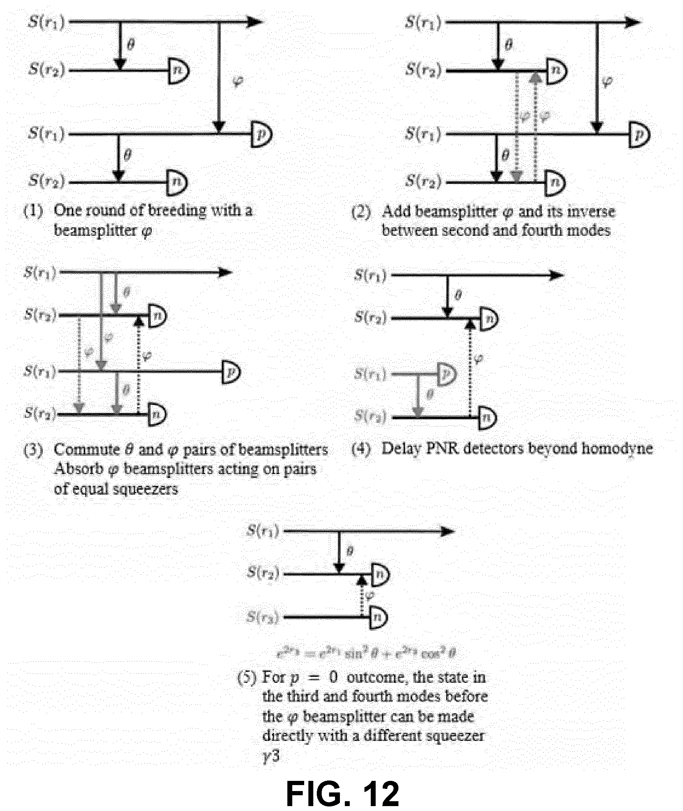

Given a circuit that can be used to breed together the output states of GBS devices with a total of $K$ modes and $M$ Gaussian measurements (e.g., homodyne, generaldyne), a GBS device with $K - M$ modes can be selected, such that the GBS device produces the same output state as a given combination of Gaussian measurements in the breeding circuit. FIG. 12 is a schematic diagram depicting steps of a derivation for finding a three-mode GBS device from a breeding circuit that combines the output states of two two-mode GBS devices at a beamsplitter and homodyne detector. FIG. 12 illustrates a "reshuffle" of a breeding circuit with two two-mode GBS devices into a three-mode GBS device that produces the same output states (e.g., three-peak approximate GKP states). By applying this process to the breeding circuit depicted in FIG. 11, the circuit corresponding to the staircase GBS family of devices in FIG. 4a can be derived.

The derivation depicted in FIG. 12 can be generalized in several ways to yield useful ways of programming the circuit elements in the staircase GBS family and/or predict its loss tolerance:

(a) Rather than selecting $p = 0$ in the homodyne measurement, alternative outcomes can be chosen. Such a measurement can be favorable for tuning the heights and spacing of the peaks in the approximate GKP state such that the circuit outputs higher quality states. The same or similar steps as the derivation in FIG. 12 can be used, except the squeezed state in the last step can be a displaced squeezed state. The resulting GBS circuit still produces a multimode Gaussian state, but with a non-zero mean.

**(b)** Rather than performing homodyne measurements in the breeding circuit, a generaldyne measurement (projection onto a squeezed state) can be performed. Such a measurement can be favorable for tuning the heights and spacing of the peaks in the approximate GKP state such that the circuit outputs higher quality states. Replacing the homodyne measurement with generaldyne, the same or similar steps as the derivation in FIG. 12 can be performed, except the value of $r_3$ can be different in the last step. This alternative method can inform tuning of the squeezers in the staircase GBS device to engineer the best approximation to a GKP state given the number of modes.

**(c)** In the breeding circuit of FIG. 11, the angles of the beamsplitters are chosen to produce an output approximate GKP state with $M + 2$ peaks in the $q$-quadrature. However, different angles of the beamsplitters in the breeding circuit can produce more peaks in the $q$-quadrature. The derivation in FIG. 12 works for an arbitrary beamsplitter angle in the breeding circuit, so these protocols can also be mapped to the staircase GBS family of circuits by tuning the beamsplitter angles in the circuit.

**(d)** The derivation in FIG. 12 can remain unchanged even if the circuit is lossy and the PNR measurements in the two-mode GBS devices are inefficient, which can be modelled as a loss channel before the PNR detectors. The loss channels can be carried through all the steps depicted in FIG. 12 and can remain before the PNR detectors at the very end. This feature is valuable for proving the loss robustness of the family of devices. In a breeding protocol, the $p = 0$ homodyne outcome is robust to detector inefficiency, since it could have only come from even-parity photon contributions; thus, if the input states were mixtures of even and odd parity squeezed cat states due to detector inefficiency, the $p = 0$ outcome can purify the output state since it could only have come from the input states having the same parity. Since the reshuffled three-mode GBS device is derived from the breeding circuit with homodyne outcome $p = 0$, the three-mode GBS device produces the same output state, so the three-mode GBS device will inherit the same robustness to loss as that breeding circuit.

**Mapping between the staircase GBS family and the tree GBS family**

Below further describes a method to map the output states of circuits from the staircase GBS family in FIG. 4a to circuits from the tree GBS family in FIGS. 7a-c. Consider again the breeding circuit in FIG. 11. In the $p$-quadrature basis, the output state of the circuit is given by the product of the two-mode GBS output states $\rho_i$ in the $p$-quadrature basis, with the arguments of the functions rescaled and shifted:

$$\langle p_0|\rho_{out}'|p_0'\rangle = \left\langle (p_0, \overline{\mathbf{p}}_{1\to N}) \left| U \bigotimes_{i=0}^{N} \hat{\rho}_i U^\dagger \right| (p_0', \overline{\mathbf{p}}_{1\to N}) \right\rangle \qquad (14)$$

$$= \left\langle T(p_0, \overline{\mathbf{p}}_{1\to N}) \left| \bigotimes_{i=0}^{N} \hat{\rho}_i \right| T(p_0', \overline{\mathbf{p}}_{1\to N}) \right\rangle \qquad (15)$$

$$= \prod_{i=0}^{N} \rho_i \left[ [T^{-1}(p_0, \overline{\mathbf{p}}_{1\to N})]_i, \left[ T^{-1}\left(p_0', \overline{\mathbf{p}}_{1\to N}\right) \right]_i \right] \qquad (16)$$

where $U$ is the unitary associated with the beamsplitter network, $T$ is the $p$-quadrature representation of the transformation applied by $U$, and $\overline{\mathbf{p}}_{1\to N}$ are the homodyne outcomes in all the measured modes.

For homodyne outcome $\overline{\mathbf{p}}_{1\to N} = 0$, and for the transformation $T$ associated with the breeding circuit in FIG. 11, the output state is:

$$\langle p_0|\rho_{out}|p_0'\rangle = \prod_{i=0}^{N} \rho_i \left( \frac{p_0}{\sqrt{M+1}}, \frac{p_0'}{\sqrt{M+1}} \right). \qquad (17)$$

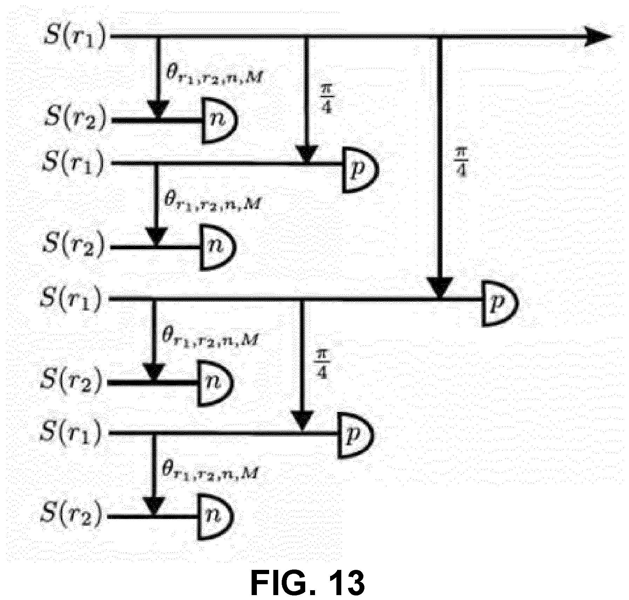

Importantly, the circuit in FIG. 11 is not a unique beamsplitter network associated with transformation $T$; rather, any network which maps the quadrature operators of the input modes to be equally weighted in the output mode will achieve the same. Thus, another example of a breeding circuit that can produce the same output state for $p = 0$ is the binary tree circuit, depicted for four two-mode GBS devices as inputs in FIG. 13.

A similar derivation to that in FIG. 12 can be used to map the binary tree breeding circuit to the tree GBS circuits; namely, the binary tree in FIG. 13 can be mapped to the circuit shown in FIG. 7a, meaning they produce the same output states. Therefore, the three circuits in FIGS. 7a-c can produce the same approximate GKP states as staircase GBS devices with five, eight and nine modes.

More specifically, FIG. 13 is a schematic diagram of an example binary tree configuration for breeding together squeezed cat states produced from two-mode GBS devices. The output state of this example circuit is the same as the output state of the breeding circuit in FIG. 11 with $M = 3$. Since both breeding circuits can be mapped to GBS devices following derivations similar to that shown in FIG. 12, both remapped GBS devices can produce the same states. This binary tree breeding circuit maps to FIG. 7a.

**Derivation of the Repeated Kraus GBS family**

Single application of the Kraus operator

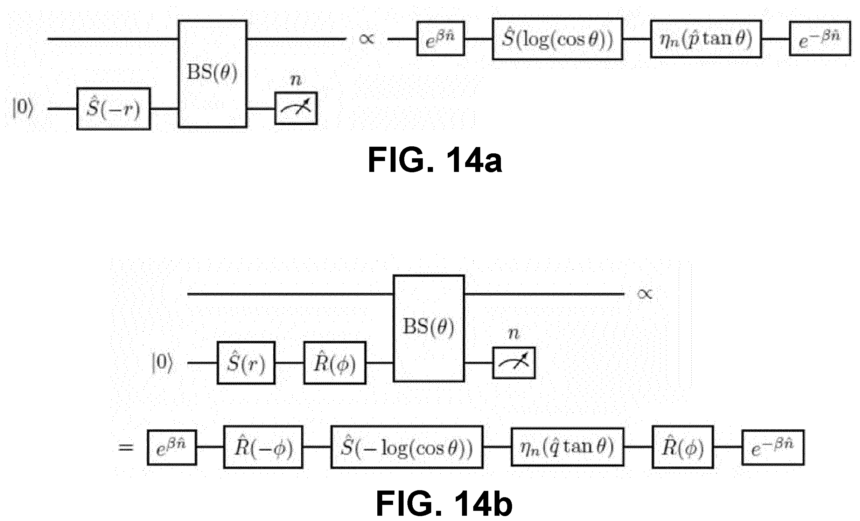

FIG. 14a is a schematic of a circuit (referred to herein as Eq. 18, (18), and/or circuit (18)), where:

$$\beta = \operatorname{arctanh}(e^{-2r}) = \log\sqrt{\coth r}, \tag{19}$$

$$\eta_n(y) = \langle n|y\rangle_q = \frac{1}{\pi^{1/4}\sqrt{2^n n!}} e^{-y^2/2} H_n(y), \tag{20}$$

and $H_n(y)$ are the Hermite polynomials.

FIG. 14b is a schematic of a more general representation of the circuit depicted on FIG. 14a (referred to herein as Eq. 21 and/or circuit 21). A squeezed cat state results from the application of circuit (18) to the state $\hat{S}(r)|0\rangle$, i.e., the two-mode GBS device. Defining $\sigma^2 = e^{-2r}$ to be the variance of the squeezed state in the q-quadrature, the following results:

$$|\text{cat}\rangle \propto e^{-\beta\hat{n}}\hat{S}(-\log\tan\theta)|n\rangle \tag{22}$$

$$_p\langle p|\text{cat}\rangle = e^{-\frac{p^2}{2\sigma^2}} I\left(\sigma^{-1}, \frac{\sqrt{1-\sigma^4}}{\sigma^2}p, \tan\theta\right) \propto e^{-\frac{p^2\sigma_f^2}{2}}\eta_n(p\mu_f) \approx$$

$$e^{-\frac{p^2\sigma_p^2}{2}}\cos\left(p\mu_p\sqrt{2n} - \frac{n\pi}{2}\right), \tag{23}$$

where in the last approximation the following is used:

$$\eta_n(x) \propto \cos\left(x\sqrt{2n} - \frac{n\pi}{2}\right)\left(1 - \frac{x^2}{2n+1}\right)^{-\frac{1}{4}}. \tag{24}$$

Multiple applications

Let $K_n$ be the "Kraus" operator from Eq. 18. Multiple applications of the operator can be considered, with outcomes $n_1, n_2, ..., n_T$. For equal squeezing, $\beta$ is the same and the thermal operations in (18) cancel out to get:

$$K_{n_T}...K_{n_1}\hat{S}(r)|0\rangle = e^{-\beta\hat{n}}\prod_{t=1}^{T}\hat{S}(\log(\cos\theta_t))\eta_{n_t}(\hat{p}\sin(\theta_t))|0\rangle_q$$

$$= \int dq\, e^{-\beta\hat{n}}\left|q\prod_{t=1}^{T}\cos\theta_t\right\rangle\prod_{t=1}^{T}\eta_{n_t}\left(q\frac{\sin(\theta_t)}{\prod_{s=1}^{t-1}\cos\theta_s}\right). \tag{25}$$

Then:

$$p\langle p|K_{n_T}\dots K_{n_1}\hat{S}(r)|0\rangle \propto \int dq k_\sigma(p,q)\prod_{t=1}^{T}\eta_{n_t}\left(q\frac{\sin(\theta_t)}{\prod_{s=1}^{t-1}\cos\theta_s^2\prod_{s=t}^{T}\cos\theta_s}\right). \tag{26}$$

In the limit $\sigma \to 0$ the kernel $k_\sigma$ approaches the Dirac delta:

$$_p\langle p|K_{n_T}\dots K_{n_1}|\psi\rangle \stackrel{\sigma\to 0}{=} \prod_{t=1}^{T}\eta_{n_t}\left(p\frac{\sin(\theta_t)}{\prod_{s=1}^{t-1}\cos\theta_s^2\prod_{s=t}^{T}\cos\theta_s}\right)$$

$$\simeq \prod_{t=1}^{T}\cos\left(p\sqrt{2n_t}\frac{\sin(\theta_t)}{\prod_{s=1}^{t-1}\cos\theta_s^2\prod_{s=t}^{T}\cos\theta_s}-\frac{n_t\pi}{2}\right), \tag{27}$$

where the last approximation holds when all $n_j$ are large.

*First protocol: exponential number of peaks*

Note that:

$$2^m\prod_{n=0}^{m-1}\cos(2^n x) = e^{-i(2^m-1)p}+\dots+e^{i(2^m-1)p}. \tag{28}$$

Therefore, if the argument of the $(t+1)^{th}$ cosine is twice the argument of the $t^{th}$ cosine, the above identity can be used to find exponentially many peaks in the quadrature distribution. Applying this requirement to (27) yields:

$$2\sqrt{n_t}\frac{\sin(\theta_t)}{\prod_{s=1}^{t-1}\cos\theta_s^2\prod_{s=t}^{T}\cos\theta_s} = \sqrt{n_{t+1}}\frac{\sin(\theta_{t+1})}{\prod_{s=1}^{t}\cos\theta_s^2\prod_{s=t+1}^{T}\cos\theta_s} \tag{29}$$

with solution:

$$\sin\theta_{t+1} = \sqrt{\frac{n_t}{n_{t+1}}}\sin(2\theta_t). \tag{30}$$

However, $n_t$ is stochastic, based on the detector outcomes. Therefore, $n_j$ can be replaced with their average value $\langle n_j\rangle$. Since that value is the same for all $n_j$, as $\langle n_j\rangle = \sinh^2(r)$, equal $n_t$ can be assumed for all t to yield:

$$\theta_{t+1} = 2\theta_t = 2^{t-1}\theta_1. \tag{31}$$

Namely, to get exponentially many peaks according to the above approximations, the squeezing angle has to decrease exponentially over the circuit depth. Note, however, that this prediction is based on the approximations in (27), large squeezing and large and equal $n_j$, so the prediction can, in some instances, break if those approximations are not accurate enough.

*Second protocol: Equal arguments and linear increase of the number of peaks*

Suppose now that all arguments of the cosines in Eq. 27 are to be the same. Eq. 30 can be generalized to get:

$$\sin\theta_{t+1} = \sqrt{\frac{n_t}{n_{t+1}}}\frac{\sin(2\theta_t)}{2}. \tag{32}$$

So, for equal numbers $n_t$ and small $\theta_t$, $\theta_{t+1}\simeq\theta_t$. However, by using the binomial expansion over $\cos(x)^T$, the number of peaks increases linearly (T + 1) as a function of the circuit depth T, and far-away peaks are suppressed by the binomial coefficient.

*Third protocol: alternating r and -r squeezing*

For simplicity, equal $\theta$ can be assumed and $K_{n_t}^{\pm}$ can be called the Kraus operators when using either $\pm r$ as squeezing. Then, for even $T$:

$$K_{n_T}^{+} K_{n_{T-1}}^{-} \cdots K_{n_2}^{+} K_{n_1}^{-} |\psi\rangle =$$

$$e^{-\beta\hat{n}} \prod_{t=1}^{T/2} \eta_{n_{2t}}(\hat{q}\tan(\theta))\hat{S}(\log(\cos\theta))\hat{S}(-\log(\cos\theta))\eta_{n_{2t-1}}(\hat{p}\sin(\theta))|0\rangle_q \qquad (33)$$

$$= e^{-\beta\hat{n}} \prod_{t=1}^{T/2} \eta_{n_{2t}}(\hat{q}\tan(\theta))\eta_{n_{2t-1}}(\hat{p}\sin(\theta))\int dp|p\rangle_p \, .$$

$$(34)$$

Using (24), a product of displacements along the different quadratures can be expected.

While various embodiments have been described and illustrated herein, a variety of other means and/or structures for performing the function and/or obtaining the results and/or one or more of the advantages described herein, and each of such variations and/or modifications are possible. More generally, all parameters, dimensions, materials, and configurations described herein are meant to be examples and that the actual parameters, dimensions, materials, and/or configurations will depend upon the specific application or applications for which the disclosure is used. It is to be understood that the foregoing embodiments are presented by way of example only and that other embodiments may be practiced otherwise than as specifically described and claimed. Embodiments of the present disclosure are directed to each individual feature, system, article, material, kit, and/or method described herein. In addition, any combination of two or more such features, systems, articles, materials, kits, and/or methods, if such features, systems, articles, materials, kits, and/or methods are not mutually inconsistent, is included within the inventive scope of the present disclosure.

Also, various concepts may be embodied as one or more methods, of which an example has been provided. The acts performed as part of the method may be ordered in any suitable way. Accordingly, embodiments may be constructed in which acts are performed in an order different than illustrated, which may include performing some acts simultaneously, even though shown as sequential acts in illustrative embodiments.

All definitions, as defined and used herein, should be understood to control over dictionary definitions, definitions in documents incorporated by reference, and/or ordinary meanings of the defined terms.

As used herein, a "module" can be, for example, any assembly and/or set of operatively-coupled electrical components associated with performing a specific function, and can include, for example, a memory, a processor, electrical traces, optical connectors, software (stored and executing in hardware) and/or the like.

The indefinite articles "a" and "an," as used herein in the specification and in the claims, unless clearly indicated to the contrary, should be understood to mean "at least one."

As used herein, the terms "substantially", "about" and/or "approximately" when used in conjunction with arrangements or relationships that can be for example expressed in numerical values and/or ranges. In some instances, the terms substantially", "about" and "approximately" can mean within $\pm 10\%$ of the recited arrangement, relationship or value. In other instances, the terms substantially", "about" and "approximately" can mean within $\pm 9\%$, $\pm 8\%$, $\pm 7\%$, $\pm 6\%$, $\pm 5\%$, $\pm 4\%$, $\pm 3\%$, $\pm 2\%$, $\pm 1\%$, less than $\pm 1\%$, or any other arrangement, relationship, or value therein or therebelow. The terms substantially", "about" and "approximately" may be used interchangeably. Furthermore, although an arrangement, relationship or numerical value modified by the term substantially", "about" or "approximately" can allow for and/or otherwise encompass a tolerance of the stated arrangement, relationship or numerical value, it is not intended to exclude the exact arrangement, relationship or numerical value stated.

The phrase "and/or," as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified. Thus, as a non-limiting example, a reference to "A and/or B", when used in conjunction with open-ended language such as "comprising" can refer, in one embodiment, to A only (optionally including elements other than B); in another embodiment, to B only (optionally including elements other than A); in yet another embodiment, to both A and B (optionally including other elements); etc.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary, such as "only one of" or "exactly one of," or, when used in the claims, "consisting of," will refer to the inclusion of exactly one element of a number or list of elements. In general, the term "or" as used herein shall only be interpreted as indicating exclusive alternatives (i.e., "one or the other but not both") when preceded by terms of exclusivity, such as "either," "one of," "only one of," or "exactly one of." "Consisting essentially of," when used in the claims, shall have its ordinary meaning as used in the field of patent law.

As used herein in the specification and in the claims, the phrase "at least one," in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements may optionally be present other than the elements specifically identified within the list of elements to which the phrase "at least one" refers, whether related or unrelated to those elements specifically identified. Thus, as a non-limiting example, "at least one of A and B" (or, equivalently, "at least one of A or B," or, equivalently "at least one of A and/or B") can refer, in one embodiment, to at least one, optionally including more than one, A, with no B present (and optionally including elements other than B); in another embodiment, to at least one, optionally including more than one, B, with no A present (and optionally including elements other than A); in yet another embodiment, to at least one, optionally including more than one, A, and at least one, optionally including more than one, B (and optionally including other elements); etc.

In the claims, as well as in the specification above, all transitional phrases such as "comprising," "including," "carrying," "having," "containing," "involving," "holding," "composed of," and the like are to be understood to be open-ended, i.e., to mean including but not limited to. Only the transitional phrases "consisting of' and "consisting essentially of' shall be closed or semi-closed transitional phrases, respectively, as set forth in the United States Patent Office Manual of Patent Examining Procedures, Section 2111.03.

Various embodiments of the invention are defined in the clauses below:

1. An apparatus, comprising:

a set of N-1 beamsplitters, N being a positive integer having a value of at least 3, each beamsplitter from the set of N-1 beamsplitters (1) optically coupled at a first input thereof to a first optical mode from a uniquely associated pair of optical modes from a plurality of optical modes, and (2) optically coupled at a second input thereof to a second optical mode from the uniquely associated pair of optical modes from the plurality of optical modes, for each uniquely associated pair of optical modes from the plurality of optical modes and the beamsplitter from the set of N-1 beamsplitters optically coupled to that uniquely associated pair of optical modes, at least one of (1) the first input of the beamsplitter being coupled to the first optical mode downstream from a beamsplitter coupled to the first optical mode, or (2) the second input of the beamsplitter being coupled to the second optical mode upstream from a beamsplitter coupled to the second optical mode; and

a set of N-1 photon number resolving (PNR) detectors, each PNR detector from the set of N-1 PNR detectors being operably coupled to a different optical mode from the plurality of optical modes,

the apparatus configured to generate, with a statistical probability greater than a predefined threshold, at least one target non-Gaussian state of light without using any additional beamsplitters beyond the set of N-1 beamsplitters.

2. The apparatus of clause 1, wherein each optical mode from at least a subset of the plurality of optical modes is configured, during operation of the apparatus, to transmit a single-mode squeezed state from a plurality of single-mode squeezed states and having a level of squeezing that is different from a level of squeezing associated with the remaining optical modes in the subset of the plurality of optical modes.

3. The apparatus of clause 1 or 2, wherein:

a first subset of optical modes from the plurality of optical modes is configured, during operation of the apparatus, to supply light having a first level of squeezing to the associated beamsplitters from the set of N-1 beamsplitters; and

a second subset of optical modes from the plurality of optical modes is configured, during operation of the apparatus, to supply light having a second level of squeezing to the associated beamsplitter from the set of N-1 beamsplitters, the second level of squeezing different from the first level of squeezing.

4. The apparatus of clause 3, wherein a number of optical modes in the first subset of optical modes is two.

5. The apparatus of any of clauses 1 to 4, wherein each optical mode from at least a subset of the plurality of optical modes is configured, during operation of the apparatus, to transmit a single-mode displaced squeezed state from a plurality of single-mode displaced squeezed states.

6. The apparatus of any of clauses 1 to 5, wherein at least one beamsplitter from the set of N-1 beamsplitters is optically coupled to the associated pair of optical modes via an associated waveguide from a plurality of waveguides.

7. The apparatus of any of clauses 1 to 6, wherein the at least one target non-Gaussian state of light includes at least one approximate Gottesman-Kitaev-Preskill (GKP) state.

8. The apparatus of any of clauses 1 to 7, wherein a first beamsplitter from the set of N-1 beamsplitters is implemented using at least one phase shifter and at least one directional coupler optically coupled to the at least one phase shifter.

9. A method, comprising:

generating a single-mode squeezed state of light in a first output mode using a first squeezed light source from a set of N squeezed light sources, N being a positive integer having a value of at least 3; generating a plurality of further single-mode squeezed states of light, each single-mode squeezed state of light from the plurality of single-mode squeezed states of light being in an associated non-output mode from a set of N-1 non-output modes, using the remaining squeezed light sources from the set of N squeezed light sources, the first output mode and the set of N-1 non-output modes collectively defining a set of N modes; causing interference of each mode from the set of N modes with two or fewer other modes from the remaining modes from the set of N modes, via an associated beamsplitter from a set of N-1 beamsplitters; and measuring each non-output mode from the set of N-1 non-output modes using a photon number resolving (PNR) detector from a set of N-1 PNR detectors, to cause, with a statistical probability greater than a predefined threshold, at least one target non-Gaussian state to be heralded without using any additional beamsplitters beyond the set of N-1 beamsplitters.

10. The method of clause 9, wherein the at least one target non-Gaussian state includes at least one approximate Gottesman-Kitaev-Preskill (GKP) state.

11. The method of clause 9 or 10, wherein each beamsplitter from the set of N-1 beamsplitters has an associated predefined and tunable beamsplitter angle.

12. The method of any of clauses 9 to 11, wherein each beamsplitter from the set of N-1 beamsplitters has an associated predefined and tunable beamsplitter phase.

13. The method of any of clauses 9 to 12, wherein each beamsplitter from the set of N-1 beamsplitters has (1) an associated predefined and tunable beamsplitter angle, and (2) an associated predefined and tunable beamsplitter phase.

14. An apparatus, comprising:

a set of N-1 beamsplitters, N being a positive integer having a value of at least 3, each beamsplitter from the set of N-1 beamsplitters (1) optically coupled at a first input thereof to a first optical mode from a plurality of optical modes, and (2) optically coupled at a second input thereof to a different further optical mode from the plurality of optical modes; and a set of N-1 photon number resolving (PNR) detectors, each PNR detector from the set of N-1 PNR detectors being operably coupled to a different optical mode from the plurality of optical modes, the apparatus configured to generate targeted non-Gaussian states of light without using any additional beamsplitters beyond the set of N-1 beamsplitters, the targeted non-Gaussian states of light including at least one approximate Gottesman-Kitaev-Preskill (GKP) state.

15. The apparatus of clause 14, wherein at least one optical mode from the plurality of optical modes is configured, during operation of the apparatus, to transmit a single-mode squeezed state, from a plurality of single-mode squeezed states, having a level of squeezing that is different from a level of squeezing of the remaining optical modes in the plurality of optical modes.

16. The apparatus of clause 14 or 15, wherein:

a first subset of optical modes from the plurality of optical modes is configured, during operation of the apparatus, to supply light having a first level of squeezing to one or more associated beamsplitters from the set of N-1 beamsplitters; and
a second subset of optical modes from the plurality of optical modes is configured, during operation of the apparatus, to supply light having a second level of squeezing to one or more associated beamsplitters from the set of N-1 beamsplitters, the second level of squeezing different from the first level of squeezing.

17. The apparatus of any of clauses 14 to 16, wherein each optical mode from at least a subset of the plurality of optical modes is configured, during operation of the apparatus, to transmit a single-mode displaced squeezed state from a plurality of single-mode displaced squeezed states.

18. The apparatus of any of clauses 14 to 17, wherein at least one beamsplitter from the set of N-1 beamsplitters is optically coupled to the first optical mode and the different further optical mode via one or more waveguides from a plurality of waveguides.

19. The apparatus of any of clauses 14 to 18, wherein a first beamsplitter from the set of N-1 beamsplitters is implemented using at least one phase shifter and at least one directional coupler optically coupled to the at least one phase shifter.

20. An apparatus, comprising:

a set of phase shifters, each phase shifter from the set of phase shifters optically coupled to one optical mode from a pair of optical modes configured to transmit substantially identical squeezed states of light;
at least one directional coupler, each directional coupler from the at least one directional coupler optically coupled to a unique pair of phase shifters from the set of phase shifters; and
a photon number resolving (PNR) detector operably coupled to a directional coupler from the at least one directional coupler,
the apparatus configured to generate, with a statistical probability greater than a predefined threshold, one or more desired non-Gaussian states of light, the one or more desired non-Gaussian states of light including at least one approximate Gottesman-Kitaev-Preskill (GKP) state.

21. The apparatus of clause 20, wherein the substantially identical squeezed states of light are generated using squeezed vacuum sources.

22. The apparatus of clause 20 or 21, wherein the substantially identical squeezed states of light are generated using sources of displaced squeezed light.

**Claims**

1. An apparatus, comprising:

a set of N-1 beamsplitters, N being a positive integer having a value of at least 3, each beamsplitter from the set of N-1 beamsplitters (1) optically coupled at a first input thereof to a first optical mode from a uniquely associated pair of optical modes from a plurality of optical modes, and (2) optically coupled at a second input thereof, to a second optical mode from the uniquely associated pair of optical modes from the plurality of optical modes, for a uniquely associated pair of optical modes from the plurality of optical modes, a first beamsplitter from the set of N-1 beamsplitters optically coupled to (1) the first optical mode (a) downstream from a second beamsplitter from the set of N-1 beamsplitters optically coupled to the first optical mode and not the second optical mode, (b) upstream from a third beamsplitter from the set of N-1 beamsplitters optically coupled to the first optical mode and not the second optical mode, and (2) the second optical mode upstream from a fourth beamsplitter from the set of N-1 beamsplitters optically coupled to the second optical mode and not the first optical mode; and
a set of N-1 photon number resolving (PNR) detectors, each PNR detector from the set of N-1 PNR detectors being operably coupled to a different optical mode from the plurality of optical modes,
the apparatus configured to generate, with a statistical probability greater than a predefined threshold, at least one target non-Gaussian state of light without using any additional beamsplitters beyond the set of N-1 beamsplitters.

2. The apparatus of claim 1, wherein a maximum number of beamsplitters, from the set of N-1 beamsplitters, that are optically coupled to an optical mode from the plurality of optical modes is logarithmic with respect to a number of optical modes of the plurality of optical modes.

3. The apparatus of claim 1 or 2, wherein the plurality of optical modes and the set of N-1 beamsplitters have a nested hierarchical configuration.

4. The apparatus of any of claims 1 to 3, wherein each optical mode from at least a subset of the plurality of optical modes is configured, during operation of the apparatus, to transmit a single-mode squeezed state from a plurality of single-mode squeezed states and having a level of squeezing that is different from a level of squeezing associated with the remaining optical modes in the subset of the plurality of optical modes.

5. The apparatus of claim 4, wherein the single-mode squeezed state is generated using a squeezed vacuum source.

6. The apparatus of any of claims 1 to 5, wherein:
a subset of optical modes from the plurality of optical modes is configured, during operation of the apparatus, to supply light having an associated level of squeezing to the associated beamsplitters from the set of N-1 beamsplitters.

7. The apparatus of claim 6, wherein:
the subset of optical modes is a first subset of optical modes, the level of squeezing is a first level of squeezing, and a second subset of optical modes from the plurality of optical modes is configured, during operation of the apparatus, to supply light having a second level of squeezing to the associated beamsplitter from the set of N-1 beamsplitters, the second level of squeezing different from the first level of squeezing.

8. The apparatus of claim 7, wherein a number of optical modes in the first subset of optical modes is two.

9. The apparatus of any of claims 1 to 8, wherein each optical mode from at least a subset of the plurality of optical modes is configured, during operation of the apparatus, to transmit a single-mode displaced squeezed state from a plurality of single-mode displaced squeezed states.

10. The apparatus of any of claims 1 to 9, wherein at least one beamsplitter from the set of N-1 beamsplitters is optically coupled to the associated pair of optical modes via an associated waveguide from a plurality of waveguides.

11. The apparatus of any of claims 1 to 10, wherein the at least one target non-Gaussian state of light includes at least one approximate Gottesman-Kitaev-Preskill (GKP) state.

12. The apparatus of any of claims 1 to 11, wherein a first beamsplitter from the set of N-1 beamsplitters is implemented using at least one phase shifter and at least one directional coupler optically coupled to the at least one phase shifter.

13. The apparatus of any of claims 1 to 12, wherein each beamsplitter from the set of N-1 beamsplitters has an associated predefined and tunable beamsplitter angle.

14. The apparatus of any of claims 1 to 13, wherein each beamsplitter from the set of N-1 beamsplitters has an associated predefined and tunable beamsplitter phase.

15. The apparatus of any of claims 1 to 14, wherein each beamsplitter from the set of N-1 beamsplitters has (1) an associated predefined and tunable beamsplitter angle, and (2) an associated predefined and tunable beamsplitter phase.

$S(r_1)$  Squeezed light

$n$  Photon Number Resolving Detector (PNR)

$\theta$  Beamsplitter

Waveguide

## FIG. 1

A  Input squeezed light → Phase shifter

Directional coupler

Phase shifter

Directional coupler

Heralded output state

B  Input squeezed light → Phase shifter

Phase shifter

To PNR detector

## FIG. 2

EP 4 660 897 A1

FIG. 3

FIG. 4b

FIG. 4a

**FIG. 5a**

FIG. 5b

FIG. 6

**FIG. 7b**

**FIG. 7a**

26

FIG. 7c

**FIG. 8**

**FIG. 9a**

EP 4 660 897 A1

EP 4 660 897 A1

FIG. 9b

30

**FIG. 10**

EP 4 660 897 A1

FIG. 11

(1) One round of breeding with a beamsplitter $\varphi$

(2) Add beamsplitter $\varphi$ and its inverse between second and fourth modes

(3) Commute $\theta$ and $\varphi$ pairs of beamsplitters Absorb $\varphi$ beamsplitters acting on pairs of equal squeezers

(4) Delay PNR detectors beyond homodyne

$$e^{2r_3} = e^{2r_1}\sin^2\theta + e^{2r_2}\cos^2\theta$$

(5) For $p = 0$ outcome, the state in the third and fourth modes before the $\varphi$ beamsplitter can be made directly with a different squeezer $\gamma3$

# FIG. 12

**FIG. 13**

EP 4 660 897 A1

$$\propto \quad \boxed{e^{\beta\hat{n}}} \; \boxed{\hat{S}(\log(\cos\theta))} \; \boxed{\eta_n(\hat{p}\tan\theta)} \; \boxed{e^{-\beta\hat{n}}}$$

$$|0\rangle - \boxed{\hat{S}(-r)} - \mathrm{BS}(\theta) \quad \overset{n}{\measuredangle}$$

**FIG. 14a**

$$|0\rangle - \boxed{\hat{S}(r)} - \boxed{\hat{R}(\phi)} - \mathrm{BS}(\theta) \quad \overset{n}{\measuredangle} \quad \propto$$

$$= \boxed{e^{\beta\hat{n}}} \; \boxed{\hat{R}(-\phi)} \; \boxed{\hat{S}(-\log(\cos\theta))} \; \boxed{\eta_n(\hat{q}\tan\theta)} \; \boxed{\hat{R}(\phi)} \; \boxed{e^{-\beta\hat{n}}}$$

**FIG. 14b**

| | Application Number |
|---|---|
| | EP 24 20 5992 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CA 3 055 860 A1 (XANADU QUANTUM TECH INC [CA]) 12 March 2021 (2021-03-12)<br>* paragraph [1030] - paragraph [1039] *<br>* paragraph [1075] *<br>* paragraph [1086] *<br>* figures 1a-2 *<br>----- | 1-15 | INV.<br>G06N10/40<br>G06N10/70 |

**TECHNICAL FIELDS SEARCHED (IPC)**

G06N

The present search report has been drawn up for all claims

| Place of search | Date of completion of the search | Examiner |
|---|---|---|
| The Hague | 3 April 2025 | Baldan, Marco |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 20 5992

This annex lists the patent family members relating to the patent documents cited in the above-mentioned European search report.
The members are as contained in the European Patent Office EDP file on
The European Patent Office is in no way liable for these particulars which are merely given for the purpose of information.

03-04-2025

| Patent document cited in search report | Publication date | Patent family member(s) | Publication date |
|---|---|---|---|
| CA 3055860 A1 | 12-03-2021 | NONE | |

For more details about this annex : see Official Journal of the European Patent Office, No. 12/82

EPO FORM P0459

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IT 102024000013108